# EUROPEAN PATENT APPLICATION

(11) **EP 4 696 903 A1**
(43) Date of publication of application: **18.02.2026**
(21) Application number: 24814264.8
(22) Date of filing: 22.05.2024
(51) Int. Cl.: F16D 65/00

(54) **FLOATING CALIPER AND DISC BRAKE**

(30) Priority: 26.05.2023 CN 202310607100; 26.05.2023 CN 202321306211 U
(71) Applicant: Bethel Automotive Safety Systems Co., Ltd., Wuhu, Anhui 241009 (CN)
(72) Inventor: LIU, Pengfei, Wuhu, Anhui 241009 (CN); DING, Wenyan, Wuhu, Anhui 241009 (CN); LI, Yundong, Wuhu, Anhui 241009 (CN); TAO, Longhai, Wuhu, Anhui 241009 (CN); WANG, Xiaohui, Wuhu, Anhui 241009 (CN)
(74) Representative: Canzler & Bergmeier Patentanwälte Partnerschaft mbB
(86) International application number: PCT/CN2024/094657
(87) International publication number: WO 2024/245065

(57) **Abstract**

Disclosed are a floating caliper and a disc brake. The floating caliper comprises a caliper body (1), wherein the caliper body (1) comprises an outer brake caliper body (12) and an inner brake caliper body (13) Which are connected to each other, the inner brake caliper body (13) is arranged on an inner side of a brake disc and is in axial sliding connection With a support (2) mounted on a vehicle body, and the outer brake caliper body (12) is arranged on an outer side of the brake disc. The floating caliper further comprises a limiting boss (31) and a limiting groove (32) Which cooperate With each other to prevent the caliper body (1) from inclining during braking, and the outer brake caliper body (12) and the support (2) are connected by means of the limiting boss (31) and the limiting groove (32). The floating caliper is compact in structure and low in improvement cost, increases the braking efficiency and prevents the caliper body from inclining, thereby solving the problem of eccentric wear caused by uneven stress of an outer friction plate (5).

## Description

### FIELD OF THE INVENTION

The present invention relates to the technical field of brake calipers, particularly to a floating caliper and a disc brake.

### BACKGROUND OF THE INVENTION

Existing floating calipers typically have a structure in which a caliper body spans a brake disc, and a bracket is configured to connect the caliper body to a fixed component of the vehicle body. The caliper body is connected to the bracket through a guiding mechanism and is capable of axial movement relative to the bracket. During service braking or parking braking, the piston presses the inner friction pad against the inner working surface of the brake disc. The caliper body moves relative to the bracket via the guiding mechanism, and an outer claw of the caliper body presses the outer friction pad against the outer working surface of the brake disc, such that the inner and outer friction pads clamp the brake disc to generate braking force.

However, in existing floating calipers, the brake disc is in a rotating state during braking. When the inner and outer friction plates clamp the brake disc, the braking force exerted on the outer friction plate, which is fixed to an outer side of the caliper body, is first transmitted to the caliper body, then through the guiding mechanism to the bracket, and only after being applied to the inner friction pad via the bracket can effective braking be achieved. Therefore, existing floating calipers have the following problems: 1) The braking force transmission path is relatively long, which may result in attenuation and thus reduce braking efficiency; and 2) When the braking force acting on the outer friction pad is transmitted through the caliper body, the caliper body may rotate or tilt, causing uneven force distribution on the outer friction pad and resulting in uneven wear, thereby adversely affecting the braking performance of the caliper.

For example, C.N. Pat. Pub. No. 201071890Y discloses a bridge-type floating caliper assembly. The assembly mainly includes a caliper, which includes a cylinder body and a bridge. The cylinder body and the bridge are fixedly connected as an integral unit. The cylinder body is directly connected to the steering knuckle. The bridge is fixedly connected to a brake pad. A piston is disposed in the cylinder bore, and a guide tube for floating connection is provided on the cylinder body. Although this patent eliminates the need for a bracket, thereby reducing cost, the caliper still suffers from insufficient braking performance and fails to address the aforementioned technical problems.

### SUMMARY OF THE INVENTION

The present invention provides a floating caliper and a disc brake that feature a compact structure and low modification cost. The present invention not only improves braking efficiency but also prevents tilting of the caliper body, thereby avoiding uneven wear of the outer friction pad caused by uneven stress.

The floating caliper of the present invention includes a caliper body. The caliper body includes an outer caliper body and an inner caliper body that are connected to each other. The inner caliper body is disposed on an inner side of a brake disc and is axially slidable relative to a bracket mounted on a vehicle body. The outer caliper body is disposed on an outer side of the brake disc. The floating caliper further includes a limiting protrusion and a limiting recess that cooperate with each other to prevent the caliper body from tilting during braking. The outer caliper body is connected to the bracket via the limiting protrusion and the limiting recess.

Preferably, the limiting protrusion is disposed on the bracket, and the limiting recess is formed in the outer caliper body.

Preferably, multiple limiting protrusions are provided and symmetrically arranged at two ends of the bracket. Multiple limiting recesses are formed, and each of the plurality of limiting recesses is engaged with a respective one of the limiting protrusions in an axially slidable manner.

Preferably, the limiting recess is an axially elongated slot. A length of the limiting recess is greater than a thickness of the limiting protrusion, and the length of the limiting recess is greater than a braking stroke of the caliper body to ensure that the limiting protrusion remains positioned in the limiting recess during braking and after brake release.

Preferably, the limiting recess is formed in the bracket, and the limiting protrusion is disposed on the outer caliper body.

Preferably, multiple limiting protrusions are provided and symmetrically arranged at two ends of the outer caliper body. Multiple limiting recesses are formed, and each of the limiting recesses is slidably engaged with the respective one of the limiting protrusions in an axially slidable manner.

Preferably, the limiting protrusion is an axially elongated protrusion. A length of the limiting protrusions is greater than the length of the limiting recess, and the length of the limiting protrusion is greater than the braking stroke of the caliper body to ensure that the limiting protrusion remains positioned in the limiting recess during braking and after brake release.

Preferably, the limiting protrusion and the limiting recess have a same longitudinal cross-sectional shape.

Preferably, an outer friction pad is disposed on the outer caliper body, and an inner friction pad is disposed on the inner caliper body.

Preferably, the caliper body is a U-shaped structure spanning the brake disc. A first mounting surface of the caliper body close to the inner side of the brake disc is connected to the bracket, a middle part of the bracket is elastically connected to the inner friction plate, and the outer friction plate is disposed on a second mounting surface of the caliper body that faces the bracket.

Preferably, a pushing device for actuating the inner friction pad is disposed at a center of the inner caliper body.

Preferably, the caliper body is an integrated structure or a split structure.

Preferably, the bracket is a U-shaped frame, and two ends of the bracket are respectively connected to the inner caliper body via guide assemblies.

Preferably, two guide holes are formed in the inner caliper body, wherein each of the guiding assemblies includes a metal bushing disposed in a respective one of the guide holes and a guide pin slidably received in the metal bushing. A first end of the guiding pin is fixedly connected to the bracket.

Preferably, two ends of the metal bushing extend outward from the respective one of the guide holes. A dust cap is sealingly mounted at a first end of the metal bushing away from the bracket, and a dust boot is mounted at a second end of the metal bushing close to the bracket.

Preferably, a second end of the metal bushing extends outward from the respective one of the guide holes and is engaged with a side of the bracket.

Preferably, the floating caliper further includes bolts or rivets that connect the outer caliper body to the inner caliper body.

The present invention further provides a disc brake including the floating caliper and a brake disc mounted on a wheel. The floating caliper spans the brake disc.

The advantageous effects of the present invention are as follows:
1. By connecting the outer side of the caliper body to the bracket via cooperating limiting protrusions and limiting recesses, the present invention not only shortens the transmission path of the braking force and improves braking efficiency, but also enhances overall braking performance.
2. In the present invention, multiple limiting protrusions and limiting recesses are provided. The length of each limiting protrusion or limiting recess is greater than the braking stroke of the caliper body. During braking or brake release, the limiting protrusions are always positioned within the limiting recesses, ensuring that the limiting protrusions remain engaged with the limiting recesses throughout service and parking braking. This allows the limiting protrusions to slide along the limiting recesses without offset, thereby preventing caliper tilting and avoiding uneven wear of the outer friction pad caused by uneven stress.
3. Two structurally identical guide assemblies are provided between the inner caliper body and the bracket. Each guide assembly includes a metal bushing and a guide pin slidably engaged within the bushing, ensuring smooth guided movement of the caliper body and further guaranteeing effective braking performance.

### BRIEF DESCRIPTION OF DRAWINGS

A brief description of the accompanying drawings and the reference numerals is as follows:
FIG. 1 is an isometric view of a floating caliper according to Embodiment 1 of the present invention;
FIG. 2 is a front view of a floating caliper according to Embodiment 1 of the present invention;
FIG. 3 is a top view of a floating caliper according to Embodiment 1 of the present invention;
FIG. 4 is a cross-sectional view taken along line A-A of FIG. 3;
FIG. 5 is a cross-sectional view taken along line B-B of FIG. 4;
FIG. 6 is a front view of an outer side of a caliper body in FIG. 5;
FIG. 7 is a top view of FIG. 6;
FIG. 8 is a top view of a bracket in FIG. 5; and
FIG. 9 is a cross-sectional view taken along line C-C of FIG. 3.

### Reference numerals

- 1: Caliper body
- 11: Guiding hole
- 12: Outer caliper body
- 13: Inner caliper body
- 2: Bracket
- 3: Braking-force transmission structure
- 31: Limiting protrusion
- 32: Limiting recess
- 4: Inner friction plate
- 5: Outer friction plate
- 6: Pushing device
- 7: Guiding assembly
- 71: Metal bushing
- 72: Guiding pin
- 8: Dust cap
- 9: Dust boot

### DETAILED DESCRIPTION

To clarify the objectives, technical solutions, and advantages of the embodiments of the present invention, the technical solutions of the embodiments are described in detail and completely with reference to the accompanying drawings. The following embodiments are provided for illustrative purposes only and are not intended to limit the scope of the present invention.

In the description of the present invention, it should be noted that the terms "upper," "lower," "front," "rear," "left," "right," "vertical," "inner," "outer," and similar expressions indicating orientation or positional relationships are based on the orientations or positions shown in the drawings. The terms are used solely for the purpose of describing the invention and simplifying the description, and are not intended to indicate or imply that the devices or components must have a particular orientation or be constructed and operated in a specific orientation. Accordingly, the terms should not be construed as limiting the present invention in any way.

In the description of the present invention, it should be noted that, unless otherwise expressly stated or limited, the terms "install," "couple," and "connect" are to be broadly interpreted. For example, these terms may refer to a fixed connection, a detachable connection, or an integral connection; a mechanical connection or an electrical connection; a direct connection or an indirect connection via an intermediate medium. Those skilled in the art should be able to understand the specific meaning of these terms in the context of the present invention based on the particular circumstances.

The present invention provides a floating caliper, the specific structure of which will be described in detail through the following embodiments.

### Embodiment 1

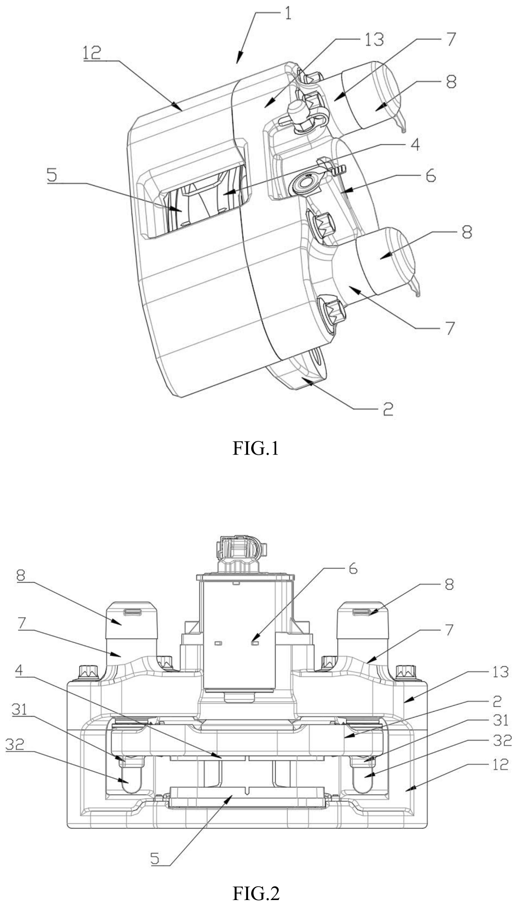

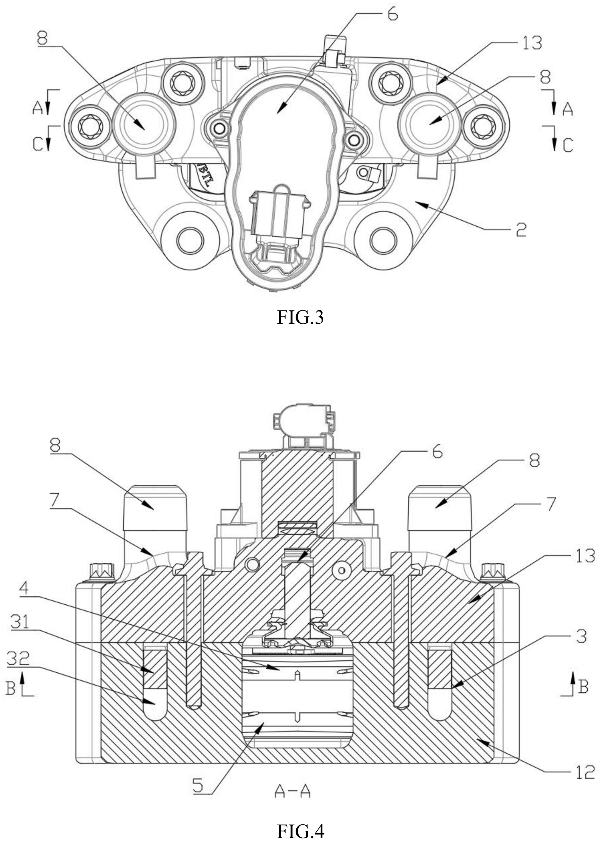

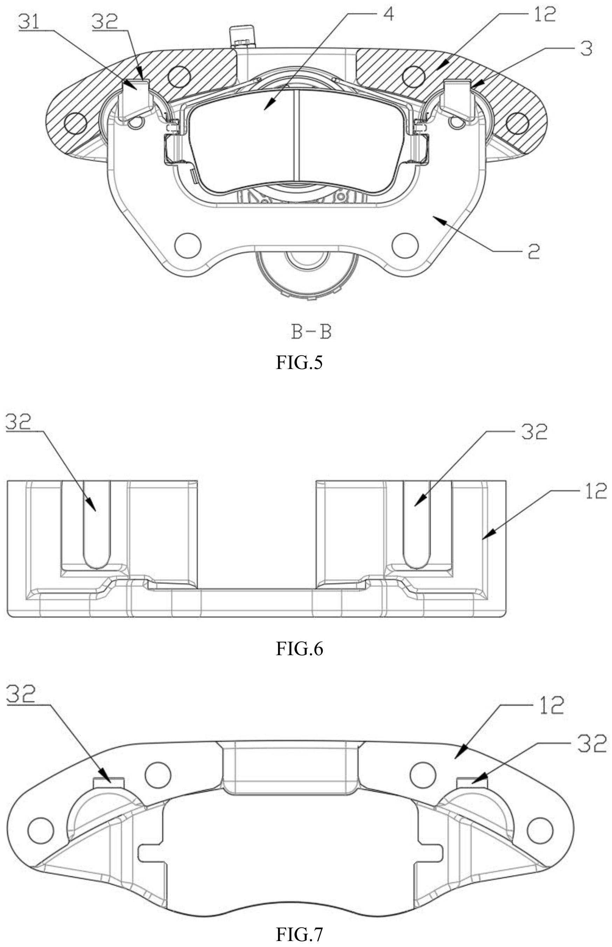

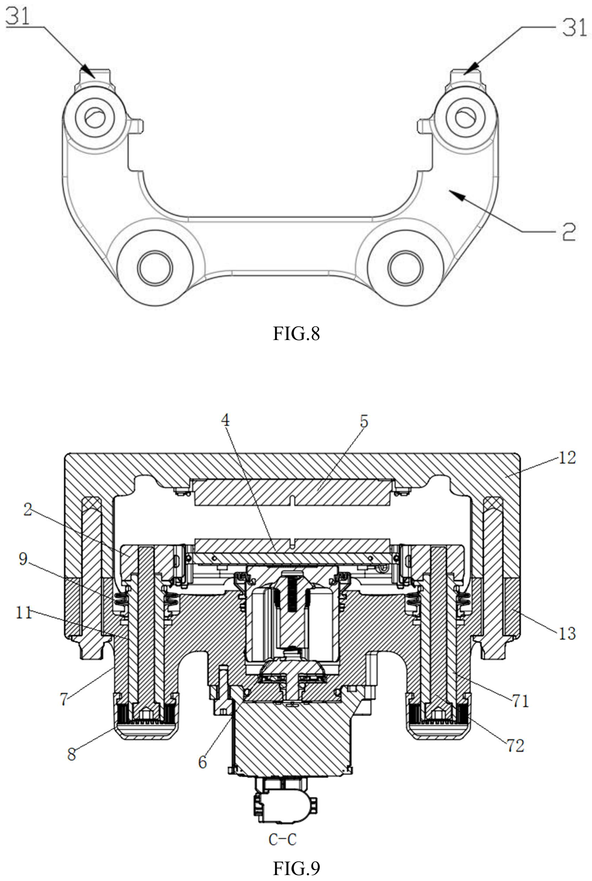

As shown in FIGs. 1-9, a floating caliper includes a caliper body 1 configured as a split structure. The caliper body 1 includes an outer caliper body 12 and an inner caliper body 13, which are connected to each other by means such as bolts or rivets. This split structure facilitates the maintenance and replacement of the caliper body 1, as only the corresponding damaged component needs to be replaced, thereby reducing maintenance costs.

The outer caliper body 12 is disposed on an outer side of a brake disc, forming the outer portion of the caliper body 1, and an outer friction plate 5 is fixed to the outer caliper body 12. The inner caliper body 13 is disposed on an inner side of the brake disc, forming the inner portion of the caliper body 1, and an inner friction plate 4 is fixed to the inner caliper body 13. The inner caliper body 13 is axially slidable relative to a bracket 2 mounted on a vehicle body through a guiding assembly 7. A braking space spanning the brake disc is formed between the outer caliper body 12 and the bracket 2, and the outer caliper body 12 is connected to the bracket 2 through a braking-force transmission structure 3.

During service braking or parking braking, the brake disc is in a rotating state. Since the outer friction pad 5 is fixed to the outer caliper body 12, the braking force applied to the outer friction pad 5 is transmitted to the outer caliper body 12 and then to a braking-force transmission structure 3. The outer caliper body 12 is connected to the bracket 2 through the braking-force transmission structure 3, such that the braking force borne by the outer caliper body 12 is further transmitted to the bracket 2. The bracket 2 transmits the braking force to the inner friction pad 4, so that the inner and outer friction pads 4,5 clamp the brake disc to achieve effective braking. By providing the braking-force transmission structure 3, the transmission path of the braking force is shortened, thereby improving braking efficiency and braking performance.

Specifically, the braking-force transmission structure 3 is configured as an axial guiding structure for the engagement of the bracket 2 and the outer caliper body 12, and an axial direction extends along a wheel axle direction, i.e., along a braking direction of the caliper body 1. The braking-force transmission structure 3 prevents the caliper body 1, particularly the outer caliper body 12, from tilting during service braking or parking braking, thereby preventing uneven wear of the outer friction pad 5 caused by uneven stress.

The axial guiding structure includes a limiting protrusion 31 provided on the bracket 2 and a limiting recess 32 formed in the outer caliper body 12. The limiting protrusion 31 is engaged with the limiting recess 32 in an axially slidable manner.

Multiple limiting protrusions 31 are provided and symmetrically disposed at two ends of the bracket 2. Multiple limiting recesses 32 are formed and engaged with the limiting protrusions 31 in an axially slidable manner. Preferably, two limiting protrusions 31 are provided. The two limiting protrusions 31 respectively protrude from two ends of the bracket 2 and are integrally formed with the bracket 2. The limiting recesses 32 are arranged along a braking direction of the outer caliper body 12 to form axially elongated slots, and the limiting protrusions 31 are slidable along the limiting recesses 32.

A longitudinal cross-section of each of the limiting protrusions 31 may be configured as a polygonal, circular, elliptical, or other shape, and a longitudinal cross-section of each of the limiting recesses 32 is the same as that of the corresponding limiting protrusion 31. A length of each of the limiting recesses 32 is greater than a thickness of the corresponding limiting protrusion 31 and also greater than a braking stroke of the caliper body 1. During braking or after brake release, the limiting protrusions 31 remain engaged with the limiting recesses 32, thereby ensuring that, during service braking and parking braking, the limiting protrusions 31 continuously slide along the limiting recesses 32 without deviation, preventing tilting of the caliper during braking and preventing uneven wear of the outer friction pads 5 caused by uneven stress.

Due to the provision of two sets of limiting protrusions 31 and limiting recesses 32 engaging with each other, and the longitudinal cross-sections of the limiting protrusions 31 corresponding to those of the corresponding limiting recesses 32, the present invention has the following advantages: on one hand, during braking, the outer friction pads 5 transmit the braking force to the outer caliper body 12. With the engagement of the two sets of limiting protrusions 31 and limiting recesses 32, rotation of the outer caliper body 12 is effectively prevented, and the braking force (torque) it bears is transmitted to the bracket 2, and further through the bracket 2 to the inner friction pads 4. This enables the inner and outer friction pads 4, 5 to clamp the brake disc, achieving effective braking while shortening the path of braking force transmission and improving braking efficiency and performance. On the other hand, since the length of each of the limiting recesses 32 is greater than the braking stroke of the caliper body 1, the limiting protrusions 31 are ensured to continuously slide along a longitudinal direction of the limiting recesses 32 during both service braking and parking braking, thereby preventing tilting of the caliper during braking and preventing uneven wear of the outer friction pads 5 caused by uneven stress.

Specifically, the caliper body 1 is configured as a U-shaped structure spanning the brake disc. The U-shaped caliper encloses the inner friction pads 4, outer friction pads 5, and the bracket 2, has the appearance of a fixed caliper, and effectively protects the inner and outer friction pads 4, 5 as well as the bracket 2.

A first mounting surface of the caliper body 1 close to the inner side of the brake disc (i.e., a mounting surface of the inner caliper body 13 close to the inner side of the brake disc) is connected to the bracket 2. The outer friction plate 5 is disposed on a second mounting surface of the caliper body 1 (i.e., a mounting surface of the outer caliper body 12) that faces the bracket 2. A push device 6 for actuating the inner friction pad 4 is provided at a center of an inner side of the caliper body 1 (i.e., the inner caliper body 13). The push device 6 includes a piston and a hydraulic or electronically controlled component connected to the piston. The push device 6 can function as both a foot brake and a parking brake. A middle part of the bracket 2 is elastically connected to the inner friction plate 4 through an elastic element such as a V-shaped spring, ensuring that during braking, the inner friction plate 4 can move a certain distance under the action of the push device 6 to approach an inner working surface of the brake disc. When the brake is released, the push device 6 returns to its original position, and the inner friction pad 4 automatically returns under the elastic restoring force.

Specifically, the bracket 2 is configured as a U-shaped frame, with its two ends respectively connected to the inner side of the caliper body 1 via guide assemblies 7. The two guide assemblies 7 are symmetrically arranged to ensure uniform load distribution. Moreover, the guide assemblies 7 are positioned outside the braking-force transmission structure 3, thereby further ensuring the smooth guided movement of the caliper body 1 during braking.

The inner side of the caliper body 1 is provided with two guide holes 11. Each of the guide assemblies 7 includes a metal bushing 71 fixedly disposed (press-fitted) in a respective one of the guide holes 11, and a guide pin 72 slidably received in the metal bushing 71. A first end of the guiding pin 72 is fixedly connected to the bracket 2 via a threaded connection or a rivet. In the present invention, two sets of structurally identical guide assemblies 7 are provided to connect the inner side of the caliper body 1 and the bracket 2. Each of the guide assemblies 7 includes the metal bushing 71 and the guide pin 72 slidably received in the metal bushing 71, ensuring smooth guided movement of the caliper body 1 and thereby contributing to excellent braking performance.

Since the bracket 2 is fixed to the vehicle body, during braking, the push device 6 drives the inner friction pad 4 to press against the inner working surface of the brake disc. After the inner friction pad 4 reaches a predetermined position, the push device 6 continues to act, causing the inner caliper body 13 to slide relative to the guide pin 72 and simultaneously moving the outer caliper body 12 toward an outer working surface of the brake disc until the outer friction pad 5 presses against the outer working surface of the brake disc, thereby clamping the brake disc between the inner and outer friction pads 4, 5, and decelerating the brake disc and the wheel connected to the brake disc.

Two ends of the metal bushing 71 extend a certain distance from the corresponding guide hole 11. A first end of the metal bushing 71, away from the bracket 2, is sealed with a dust cap 8. A second end of the metal bushing 71, adjacent to the bracket 2, is provided with a dust boot 9, so as to prevent dust or debris from entering the corresponding guide hole 11 or the sliding clearance between the metal bushing 71 and the guide pin 72, thereby ensuring that the floating movement of the caliper body 1 relative to the bracket 2 is not adversely affected.

In addition, after extending out of the corresponding guide hole 11, the second end of the metal bushing 71 engages with one side of the bracket 2, thereby ensuring that the inner side of the caliper body 1 (i.e., the inner caliper body 13) accurately returns to its original position after brake release, and further preventing return deviation that could affect the smoothness of subsequent braking.

The present invention further provides a disc brake including the floating caliper described above and a brake disc mounted on a wheel. The outer caliper body 12 of the floating caliper and the bracket 2 span the brake disc.

The braking principle of the disc brake is as follows: during service braking or parking braking, the push device 6 drives the inner friction pad 4 to press against an inner working surface of the brake disc. After the inner friction pad 4 reaches a predetermined position, the push device 6 continues to act, causing the inner caliper body 13 to slide relative to the guide pin 72 and simultaneously moving the outer caliper body 12 toward an outer working surface of the brake disc. During this process, the limiting protrusions 31 on the bracket 2 slide in the limiting recesses 32 of the outer caliper body 12 until the outer friction pad 5 presses against the outer working surface of the rotating brake disc. The braking force applied to the outer friction pad 5 is transmitted through the outer caliper body 12, and the cooperation of the two sets of limiting protrusions 31 and limiting recesses 32 prevents rotation of the outer caliper body 12, thereby transmitting the braking force (torque) borne by the outer caliper body 12 to the bracket 2, which in turn transfers it to the inner friction pad 4. As a result, the inner and outer friction pads 4, 5 clamp the brake disc, enabling deceleration of the brake disc and the wheel connected to the brake disc.

### Embodiment 2

Different from Embodiment 1, the axial guiding structure of Embodiment 2 includes a limiting recess 32 formed in a through-thickness direction of the bracket 2 and a limiting protrusion 31 provided on the outer side of the caliper body 1 (i.e., on the outer caliper body 12). The limiting protrusion 31 is slidably engaged with the limiting recess 32 in the axial direction. The operating principle is the same as that of Embodiment 1, and therefore, the corresponding structure is not shown in the accompanying drawings.

Multiple limiting protrusions 31 are provided and symmetrically arranged at two ends of the outer side of the caliper body 1. Multiple limiting recesses 32 are formed and engaged with the limiting protrusions 31 in an axially slidable manner. Preferably, two limiting protrusions 31 and two limiting recesses 32 are provided. The two limiting protrusions 31 are arranged along the braking direction of the outer caliper body 12 to form axially elongated protrusions, which are integrally formed with the outer caliper body 12. The two limiting recesses 32, arranged in the through-thickness direction of the bracket 2, are respectively located at two ends of the bracket 2 and are capable of sliding along the longitudinal direction of the limiting protrusions 31.

A length of each of the limiting protrusions 31 is greater than that of the corresponding limiting recess 32 and also exceeds the braking stroke of the caliper body 1. During braking or brake release, the limiting recesses 32 remain engaged with the limiting protrusions 31, thereby ensuring that, throughout the service brake and parking brake processes, the limiting protrusions 31 continuously cooperate with the limiting recesses 32. This allows the limiting recesses 32 to slide along the longitudinal direction of the limiting protrusions 31 without any lateral displacement, effectively preventing tilting of the caliper during braking and preventing uneven wear of the outer friction pad 5 caused by uneven stress.

### Embodiment 3

Different from Embodiments 1 and 2, the caliper body 1 in Embodiment 3 is configured as an integral structure, in which the outer caliper body 12 and the inner caliper body 13 of Embodiments 1 and 2 are combined into a single unit (not shown in the drawings), thereby further enhancing braking stability.

In conclusion, the present invention features a compact structure with low modification cost, which not only improves braking efficiency but also effectively prevents caliper tilting and uneven wear of the outer friction pad 5 caused by uneven stress.

The above description is provided solely to illustrate the principles of the present invention and is not intended to limit the invention to the specific structures or applications shown. Accordingly, all possible modifications, variations, and equivalent structures are intended to fall within the scope of the present invention as claimed.

## Claims

1. A floating caliper, comprising:
a caliper body comprising an outer caliper body and an inner caliper body that are connected to each other, wherein the inner caliper body is disposed on an inner side of a brake disc and is axially slidable relative to a bracket mounted on a vehicle body, and the outer caliper body is disposed on an outer side of the brake disc; and
a limiting protrusion and a limiting recess that cooperate with each other to prevent the caliper body from tilting during braking, wherein the outer caliper body is connected to the bracket via the limiting protrusion and the limiting recess.

2. The floating caliper according to claim 1, wherein the limiting protrusion is disposed on the bracket, and the limiting recess is formed in the outer caliper body.

3. The floating caliper according to claim 2, wherein a plurality of limiting protrusions is provided and symmetrically disposed at two ends of the bracket, wherein a plurality of limiting recesses is formed, and each of the plurality of limiting recesses is engaged with a respective one of the limiting protrusions in an axially slidable manner.

4. The floating caliper according to claim 2, wherein the limiting recess is an axially elongated slot, wherein a length of the limiting recess is greater than a thickness of the limiting protrusion, and the length of the limiting recess is greater than a braking stroke of the caliper body to ensure that the limiting protrusion remains positioned in the limiting recess during braking and after brake release.

5. The floating caliper according to claim 1, wherein the limiting recess is formed in the bracket, and the limiting protrusion is disposed on the outer caliper body.

6. The floating caliper according to claim 5, wherein a plurality of limiting protrusions is provided and symmetrically disposed at two ends of the outer caliper body, wherein a plurality of limiting recesses is formed, and each of the plurality of limiting recesses is engaged with a respective one of the limiting protrusions in an axially slidable manner.

7. The floating caliper according to claim 5, wherein the limiting protrusion is an axially elongated protrusion, wherein a length of the limiting protrusion is greater than a length of the limiting recess, and the length of the limiting protrusion is greater than a braking stroke of the caliper body to ensure that the limiting protrusion remains positioned in the limiting recess during braking and after brake release.

8. The floating caliper according to any one of claims 1-7, wherein the limiting protrusion and the limiting recess have a same longitudinal cross-sectional shape.

9. The floating caliper according to any one of claims 1-7, wherein an outer friction pad is disposed on the outer caliper body, and an inner friction pad is disposed on the inner caliper body.

10. The floating caliper according to claim 9, wherein the caliper body is a U-shaped structure spanning the brake disc, wherein a first mounting surface of the caliper body close to the inner side of the brake disc is connected to the bracket, a middle part of the bracket is elastically connected to the inner friction plate, and the outer friction plate is disposed on a second mounting surface of the caliper body that faces the bracket.

11. The floating caliper according to claim 10, wherein a pushing device for actuating the inner friction pad is disposed at a center of the inner caliper body.

12. The floating caliper according to claim 10, wherein the caliper body is an integrated structure or a split structure.

13. The floating caliper according to claim 1, wherein the bracket is a U-shaped frame, and two ends of the bracket are respectively connected to the inner caliper body via guiding assemblies.

14. The floating caliper according to claim 13, wherein two guide holes are formed in the inner caliper body, wherein each of the guiding assemblies comprises a metal bushing disposed in a respective one of the guide holes and a guide pin slidably received in the metal bushing, wherein a first end of the guiding pin is fixedly connected to the bracket.

15. The floating caliper according to claim 14, wherein two ends of the metal bushing extend outward from the respective one of the guide holes, wherein a dust cap is sealingly mounted at a first end of the metal bushing away from the bracket, and a dust boot is mounted at a second end of the metal bushing close to the bracket.

16. The floating caliper according to claim 14, wherein a second end of the metal bushing extends outward from the respective one of the guide holes and is engaged with a side of the bracket.

17. The floating caliper according to claim 1, further comprising bolts or rivets that connect the outer caliper body to the inner caliper body.

18. A disc brake, comprising:
a floating caliper according to any one of claims 1-17; and
a brake disc mounted on a wheel;
wherein the floating caliper spans the brake disc.
